# EUROPEAN PATENT APPLICATION

(11) **EP 4 253 494 A1**
(43) Date of publication of application: **04.10.2023**
(21) Application number: 21897416.0
(22) Date of filing: 16.08.2021
(51) Int. Cl.: C09J 11/04, C09J 11/06, C08K 5/5415, C08L 83/06, C09D 183/06, C09J 183/04, C09K 3/10, C08K 3/013, C08K 3/04, C08K 3/26, C08K 3/36, C09D 7/61

(54) **ROOM TEMPERATURE CURABLE ORGANOPOLYSILOXANE COMPOSITION, ARTICLE, HYDROLYZABLE ORGANOSILANE COMPOUND AND METHOD FOR PRODUCING SAME**

(30) Priority: 26.11.2020 JP 2020195627
(71) Applicant: SHIN-ETSU CHEMICAL CO., LTD., Tokyo 1000005 (JP)
(72) Inventor: UTA Akira, Annaka-shi, Gunma 379-0224 (JP)
(74) Representative: Mewburn Ellis LLP
(86) International application number: PCT/JP2021/029897
(87) International publication number: WO 2022/113437

(57) **Abstract**

The present invention provides: a room temperature curable organopolysiloxane composition which has curability equivalent to the curability of conventional dealcoholization type or deoximation type room temperature curable organopolysiloxane compositions even if various catalysts are used therefor, while reducing harmful effects on human bodies and burden on the environment, and which enables the achievement of a cured product that has good rubber properties, adhesiveness and durability if cured; various articles which comprise this composition or a cured product that is obtained by curing this composition; a novel hydrolyzable organosilane compound which is useful as a curing agent for this composition; and a method for producing this novel hydrolyzable organosilane compound. A room temperature curable organopolysiloxane composition which contains, as a curing agent, a hydrolyzable organosilane compound that is represented by general formula (2) and releases/discharges a cyclic ketone compound as a leaving group and/or a partial hydrolysis-condensation product of the hydrolyzable organosilane compound. 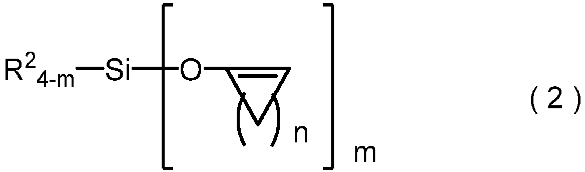 (In the formula, R² represents a monovalent hydrocarbon group having from 1 to 10 carbon atoms; n represents a number from 1 to 8; and m represents 3 or 4.)

## Description

### TECHNICAL FIELD

The present invention relates to a condensation-curable room temperature curable organopolysiloxane composition that is crosslinked (cured) through a hydrolysis/condensation reaction by humidity (moisture) in the air at room temperature (23°C ± 15°C), particularly a room temperature curable organopolysiloxane composition in which a leaving compound desorbed/generated from a crosslinking agent (curing agent) through a hydrolysis reaction during curing is a cyclic ketone compound such as cyclobutanone or cyclopentanone, and the room temperature curable organopolysiloxane composition is adequately cured through a condensation reaction and gives a silicone rubber cured product (elastomeric organopolysiloxane cured product) excellent in adhesive property, various articles including the composition or a cured product thereof (silicone rubber), and a novel hydrolyzable organosilane compound that releases cyclopentanone as a leaving group by hydrolysis and a method for producing the hydrolyzable organosilane compound.

### BACKGROUND ART

Room temperature curable organopolysiloxane compositions that are cured at room temperature to form silicone rubber have been heretofore known and widely used in industry. As mechanisms of being cured at room temperature, a mechanism of being cured through a hydrosilylation addition reaction, a mechanism of being radically cured by ultraviolet rays, a mechanism of being cured through a condensation reaction between a hydrolyzable group bonded to a silicon atom and a hydroxyl group, and the like are known. In particular, a room temperature curable organopolysiloxane composition which is cured through a condensation reaction has an advantage that it can be easily cured at room temperature, and is unlikely to undergo inhibition of curing by impurities which occurs in a hydrosilylation addition reaction or the like. Therefore, cured products (silicone rubber cured products) obtained by curing a room temperature curable organopolysiloxane composition that is cured through a condensation reaction are widely used for in the fields of in-vehicle gaskets and sealing materials for automobiles, building sealants for building, electrical or electronic parts, and the like.

A room temperature curable organopolysiloxane composition that is cured through a condensation reaction contains a hydrolyzable organosilane compound having a hydrolyzable group in the molecule as a curing agent (crosslinking agent) in the composition, and as curing agents that have widely used, a deoximation-type hydrolyzable organosilane compound that releases an oxime compound such as 2-butanone oxime during curing, a dealcoholization-type hydrolyzable organosilane compound that releases an alcohol compound such as methanol, and the like are known. A rubbery cured product obtained by curing such a composition containing a curing agent has high heat resistance, chemical resistance and weather resistance originating from silicone (siloxane structure).

On the other hand, the deoximation-type curing agent is not preferable because an oxime compound such as 2-butanone oxime which is generated by the curing agent during curing may be carcinogenic, and the dealcoholization-type curing agent is not preferable from the viewpoint of the health of the human body because methanol generated by the curing agent during curing is toxic to the human body and is designated as a deleterious substance. Further, these compositions, in which a tin catalyst strictly regulated as an environmentally hazardous substance may be used as a curing catalyst, are not preferable from the viewpoint of securing safety for workers and protecting the environment in recent years, and replacement by a hydrolyzable organosilane compound (curing agents) having a safer leaving group (leaving compound) is required.

Further, the curing agent (crosslinking agent) used for the dealcoholization-type room temperature curable organopolysiloxane composition has lower reactivity as compared to the curing agent used in the deoximation-type room temperature curable organopolysiloxane composition, and therefore the dealcoholization-type has a disadvantage of being inferior in curability to the deoximation type.

From the viewpoint of environmental protection and suppression of health damage, products that are more environmentally friendly and safer while having higher performance are particularly desired, and there is an increasing demand for a room temperature curable organopolysiloxane composition in which a leaving compound has high safety and excellent performance is exhibited.

JP-A 2018-515634 discloses a condensation curable organosiloxane composition which desorbs and releases an α-hydroxycarboxylic acid ester compound typified by ethyl lactate and contains a silane compound as a crosslinking agent, as a replacement for dealcoholization-type and deoximation-type curing agents. In this system, ethyl lactate as a leaving group is a compound having high safety, but the use of a tin catalyst as a catalyst is essential. A tin catalyst has been pointed out to be harmful to aquatic organisms, and the use of a tin catalyst is not preferable from the viewpoint of environmental protection.

JP-B S51-39673 discloses a condensation curable organopolysiloxane composition that releases a ketone-based compound typified by acetone. Acetone is a compound less harmful to the human body as compared with 2-butanone oxime and methanol, and provides a composition that gives a silicone rubber cured product that is cured more quickly and has better durability over conventional cured forms. However, there is a problem that acetone has high volatility with its burning point being as low as -20°C, and therefore is used in limited environments.

Cyclopentanone is a compound having low toxicity and high biodegradability and having a burning point of 35°C, which is relatively high for an organic solvent. For silane coupling agents having cyclopentanone as a leaving group, Journal of Organometallic Chemistry (1984), 273(1) (Non-Patent Document 1) and Journal of Organometallic Chemistry (1985), 281(2-3) (Non-Patent Document 2) show an example of synthesis of tris(1-cyclopentene -1-yloxy)methylsilane having a methyl group as a substituent, but does not show use as a crosslinking agent for a room temperature curable organopolysiloxane composition.

### PRIOR ART DOCUMENTS

### PATENT DOCUMENTS

Patent Document 1: JP-A 2018-515634
Patent Document 2: JP-B S51-39673

### NON-PATENT DOCUMENTS

Non-Patent Document 1: Journal of Organometallic Chemistry (1984), 273(1)
Non-Patent Document 2: Journal of Organometallic Chemistry (1985), 281(2-3)

### SUMMARY OF INVENTION

### TECHNICAL PROBLEM

The present invention has been made in view of the above-described circumstances, and an object of the present invention is to provide a room temperature curable organopolysiloxane composition in which a hydrolyzable organosilane compound whose leaving group (leaving compound) is a cyclic ketone compound such as cyclobutanone or cyclopentanone, which has not been reported to have health harmfulness to the human body such as carcinogenicity and reproduction toxicity and environmental harmfulness such as toxicity to aquatic organisms and which has a relatively high burning point, is used as a curing agent. Regardless of which catalyst is used, the room temperature curable organopolysiloxane composition is comparable in curability to conventional dealcoholization-type and deoximation-type room temperature curable organopolysiloxane compositions, and less harmful to the human body and less environmentally hazardous, and can give a silicone rubber cured product having good rubber physical properties, adhesive property and durability after curing. Another object of the present invention is to provide various articles including the composition or a cured product (silicone rubber) obtained by curing the composition, and a novel hydrolyzable organosilane compound useful as a curing agent for the composition and a method for producing the hydrolyzable organosilane compound.

### SOLUTION TO PROBLEM

The present inventor has intensively conducted studies for achieving the above-described object, and resultantly found that a vinyl group or a phenyl group, or a tetrafunctional organosilicon compound (hydrolyzable organosilane compound) as a substituent, which is represented by the following general formula (4) and releases cyclopentanone having low toxicity to the human body by hydrolysis, can give a room temperature curable organopolysiloxane composition which is excellent in safety and exhibits rubber physical properties and rapidity of curing equivalent to or better than those of a conventional curing-type (dealcoholization-type or deoximation-type) room temperature curable organopolysiloxane composition when applied as a curing agent for the room temperature curable organopolysiloxane composition. 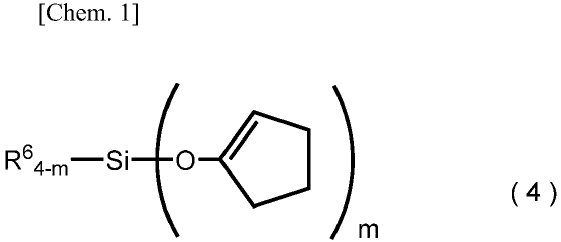 wherein R⁶ is a vinyl group or a phenyl group, and m is 3 or 4.

Further, it has been found that a room temperature curable organopolysiloxane composition containing a hydrolyzable organosilane compound, which is represented by the following general formula (2) and desorbs and releases a cyclic ketone compound such as cyclobutanone or cyclopentanone as a leaving group (leaving compound), and/or a partial hydrolytic condensate thereof as a curing agent (crosslinking agent) solves the problems about harmfulness to the human body and the environment and safety, and even if an organic compound containing titanium, guanidine or the like is added as a curing catalyst to this composition, curability and cured product performance equivalent to those when a tin catalyst is added is exhibited, leading to attainment of the present invention. 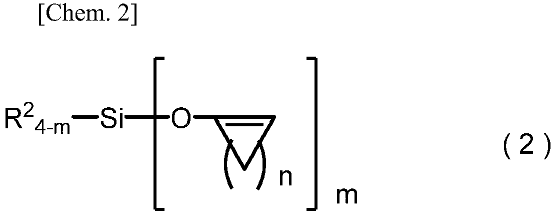 wherein R² is a monovalent hydrocarbon group having 1 to 10 carbon atoms, n is an integer of 1 to 8, and m is 3 or 4.

That is, the present invention provides the following room temperature curable organopolysiloxane composition, various articles (e.g. automobile parts, automobile oil seals, electric and electronic parts, building structures, civil engineering structures, adhesive agents, sealing materials, potting agents and coating agents) including the composition or a cured product thereof, a hydrolyzable organosilane compound, a method for producing the hydrolyzable organosilane compound, and the like.
[1] A room temperature curable organopolysiloxane composition including:
   (A) 100 parts by weight of an organopolysiloxane of the following general formula (1) which has a viscosity of 20 to 1,000,000 mPa-s at 23°C:

      HO-(SiR¹₂O)ₐ-H (1)

      wherein R¹ is an unsubstituted or substituted monovalent hydrocarbon group having 1 to 10 carbon atoms, R¹s may be the same or different groups, and a is an integer of 50 or more; and
   (B) 1 to 40 parts by weight of a hydrolyzable organosilane compound of the following general formula (2) and/or a partial hydrolytic condensate thereof 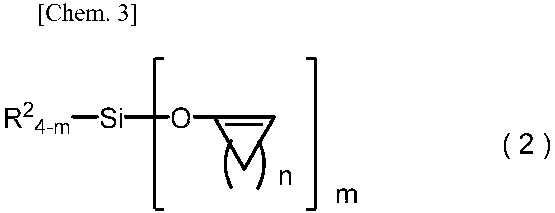 wherein R² is a monovalent hydrocarbon group having 1 to 10 carbon atoms, n is an integer of 1 to 8, and m is 3 or 4.
[2] The room temperature curable organopolysiloxane composition according to [1], wherein the hydrolyzable organosilane compound and/or a partial hydrolytic condensate thereof as the component (B) desorbs a cyclic ketone compound by hydrolysis.
[3] The room temperature curable organopolysiloxane composition according to [2], wherein the cyclic ketone compound desorbed is cyclobutanone or cyclopentanone.
[4] The room temperature curable organopolysiloxane composition according to any one of [1] to [3], wherein the hydrolyzable organosilane compound as the component (B) is a hydrolyzable organosilane compound of the following general formula (4): 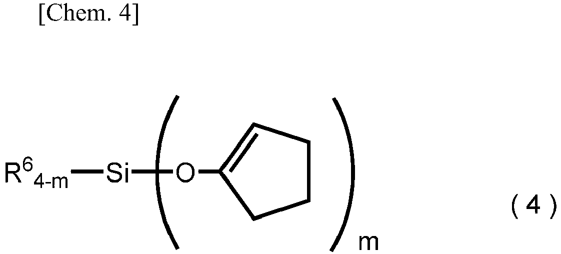 wherein R⁶ is a vinyl group or a phenyl group, and m is 3 or 4.
[5] The room temperature curable organopolysiloxane composition according to any one of [1] to [4], further including (C) 0.01 to 10 parts by weight of a curing catalyst per 100 parts by weight of the component (A).
[6] The room temperature curable organopolysiloxane composition according to [5], wherein the (C) curing catalyst is at least one selected from a tin catalyst, a titanium catalyst, an organic strong base catalyst, and an organobismuth catalyst.
[7] The room temperature curable organopolysiloxane composition according to any one of [1] to [6], which is free of a tin catalyst.
[8] The room temperature curable organopolysiloxane composition according to any one of [1] to [7], further including (D) 0.01 to 10 parts by weight of a silane coupling agent of the following general formula (3) and/or a partial hydrolytic condensate thereof per 100 parts by weight of the component (A):

   R³R⁴_{b}SiX_{3-b} (3)

   wherein R³ is a monovalent hydrocarbon group having 1 to 20 carbon atoms and having at least one functional group (with exclusion of a guanidyl group) containing one or more heteroatoms selected from a nitrogen atom, a sulfur atom and an oxygen atom, R⁴ is an unsubstituted or substituted monovalent hydrocarbon group having 1 to 10 carbon atoms, X is a hydrolyzable group, and b is 0, 1 or 2.
[9] The room temperature curable organopolysiloxane composition according to any one of [1] to [8], further including (E) 1 to 500 parts by weight of an inorganic filling agent per 100 parts by weight of the component (A).
[10] The room temperature curable organopolysiloxane composition according to [9], wherein the component (E) is one or more inorganic filling agents selected from calcium carbonate, fumed silica, precipitated silica, carbon black and aluminum oxide.
[11] An automobile part including a cured product of the room temperature curable organopolysiloxane composition according to any one of [1] to [10].
[12] An automobile oil seal including a cured product of the room temperature curable organopolysiloxane composition according to any one of [1] to [10].
[13] An electrical or electronic part including a cured product of the room temperature curable organopolysiloxane composition according to any one of [1] to [10].
[14] A building structure including a cured product of the room temperature curable organopolysiloxane composition according to any one of [1] to [10].
[15] A civil engineering structure including a cured product of the room temperature curable organopolysiloxane composition according to any one of [1] to [10].
[16] An adhesive agent including the room temperature curable organopolysiloxane composition according to any one of [1] to [10].
[17] A sealing material including the room temperature curable organopolysiloxane composition according to any one of [1] to [10].
[18] A potting agent including the room temperature curable organopolysiloxane composition according to any one of [1] to [10].
[19] A coating agent including the room temperature curable organopolysiloxane composition according to any one of [1] to [10].
[20] A hydrolyzable organosilane compound of the following general formula (4): 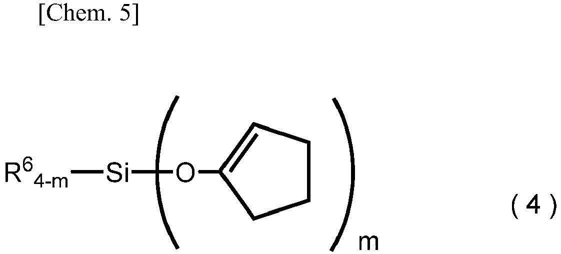 wherein R⁶ is a vinyl group or a phenyl group, and m is 3 or 4.
[21] The hydrolyzable organosilane compound according to [20], which desorbs cyclopentanone by hydrolysis.
[22] A method for producing the hydrolyzable organosilane compound according to [20] or [21], including a step of reacting a chlorosilane compound with cyclopentanone in the presence of a basic substance and a catalyst as shown by the following reaction formula [I]: 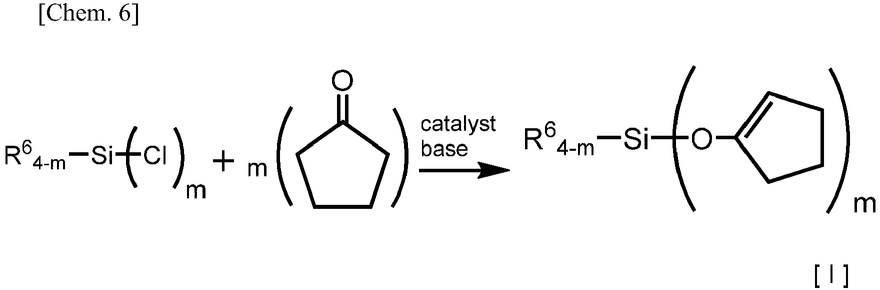 wherein R⁶ and m are as described above.
[23] The method for producing the hydrolyzable organosilane compound according to [22], wherein an amount of addition of the cyclopentanone is 0.95 to 3.0 mol per 1 mol of chlorine atoms in the chlorosilane compound.
[24] The method for producing the hydrolyzable organosilane compound according to [22] or [23], wherein the catalytic substance is copper chloride, copper iodide, copper bromide, silver chloride, silver iodide or silver bromide.
[25] The method for producing the hydrolyzable organosilane compound according to any one of [22] to [24], wherein an amount of addition of the catalytic substance is 0.001 to 0.5 mol per 1 mol of the chlorosilane compound.
[26] The method for producing the hydrolyzable organosilane compound according to any one of [22] to [25], wherein the basic substance is trimethylamine, triethylamine, tripropylamine, tributylamine, urea, diazabicycloundecene or diazabicyclononene.
[27] The method for producing the hydrolyzable organosilane compound according to any one of [22] to [26], wherein an amount of addition of the basic substance is 0.95 to 2.5 mol per 1 mol of chlorine atoms in the chlorosilane compound.

### ADVANTAGEOUS EFFECTS OF INVENTION

The room temperature curable organopolysiloxane composition of the present invention can be suitably used for various adhesive agents, sealing materials, potting agents, coating agents and the like favoring the health and safety of the human body because a compound (leaving compound) generated from a curing agent (crosslinking agent) through a hydrolysis and condensation reaction during curing is a cyclic ketone compound having high safety, such as cyclobutanone or cyclopentanone, and the composition is excellent in curability and adhesive property after curing, and gives a silicone rubber cured product (elastomeric organopolysiloxane cured product) having good durability. Further, the room temperature curable organopolysiloxane composition of the present invention can be suitably used for various adhesive agents, sealing materials, potting agents, coating agents and the like favoring environmental protection (reduction of hazardousness) because even if an organic compound containing titanium, bismuth, guanidine or the like is added as a curing catalyst, curability and cured product performance equivalent to those when a tin catalyst is added is exhibited.

In addition, the hydrolyzable organosilane compound of the present invention releases a compound having higher safety as a leaving group (leaving compound), and in particular, if the hydrolyzable organosilane compound is used as a crosslinking agent for a room temperature curable organopolysiloxane composition, the composition is excellent in curability, is rapidly cured when exposed to air, and exhibit excellent physical properties. Therefore, a composition containing the hydrolyzable organosilane compound can be effectively used for building use, automobiles use and electrical or electronic adhesive agents use.

### DESCRIPTION OF EMBODIMENTS

Hereinafter, the present invention is described in detail. In the present invention, the viscosity is a value measured with a rotational viscometer in accordance with the method specified in JIS Z 8803. Unless otherwise specified, the term "room temperature" refers to a state of in which the temperature is 23°C ± 15°C and the humidity is 50% RH ± 5% RH.

### [Component (A) Organopolysiloxane]

A component (A) used for a room temperature curable organopolysiloxane composition of the present invention is an organopolysiloxane of the following general formula (1) which has a viscosity of 20 to 1,000,000 mPa·s at 23°C.

HO-(SiR¹₂O)ₐ-H (1)

wherein R¹ is an unsubstituted or substituted monovalent hydrocarbon group having 1 to 10 carbon atoms, and R¹s may be the same or different groups; and a is an integer of 50 or more.

The component (A) is a linear diorganopolysiloxane with a viscosity of 20 to 1,000,000 mPa·s at 23°C, in which the main chain includes repeating diorganosiloxane units as shown in formula (1) and both ends of the molecular chain are blocked with a hydroxyl group (silanol group). The component (A) acts as a main component (base polymer) of the room temperature curable organopolysiloxane composition of the present invention.

In the above formula (1), R¹ is an unsubstituted or substituted monovalent hydrocarbon group having 1 to 10, particularly 1 to 6 carbon atoms, and examples thereof include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; cycloalkyl groups such as a cyclohexyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Alternatively, groups in which a part of hydrogen atoms of any of the above-mentioned hydrocarbon groups is replaced by a halogen atom or the like such as chlorine, fluorine or bromine, for example, a trifluoropropyl group or the like are mentioned. The unsubstituted or substituted monovalent hydrocarbon group of R¹ is preferably one that is free of an aliphatic unsaturated bond, and specifically, an alkyl group such as a methyl group or an aryl group such as a phenyl group is more preferable, and a methyl group is particularly preferable. R¹s may be the same group or different groups.

In the above formula (1), "a" which indicates the number (or polymerization degree) of repeating difunctional diorganosiloxane units (SiR¹₂O_{2/2}) forming the main chain is an integer of 50 or more, preferably an integer of 50 to 2,000, more preferably an integer of 100 to 1,500, particularly preferably an integer of 200 to 1,200.

In the present invention, the polymerization (or molecular weight) can be determined as, for example, a numerical average polymerization degree (or numerical average molecular weight) or the like in terms of polystyrene in gel permeation chromatography (GPC) analysis using toluene, tetrahydrofuran (THF) or the like as a developing solvent.

The viscosity of the organopolysiloxane as the component (A) at 23°C is 20 to 1,000,000 mPa·s, preferably 100 to 300,000 mPa·s, more preferably 1,000 to 200,000 mPa·s, particularly preferably 10,000 to 100,000 mPa-s. If the viscosity of the organopolysiloxane is less than the lower limit value (20 mPa-s), an economic disadvantage arises because a large amount of a component (C) described later is required. It is not preferable that the viscosity of the organopolysiloxane is more than the upper limit value (1,000,000 mPa·s) because workability is deteriorated.

The component organopolysiloxanes as the component (A) may be used alone or in combination of two or more thereof.

### [Component (B) Hydrolyzable organosilane compound and/or partial hydrolytic condensate thereof]

The component (B) used for the room temperature curable organopolysiloxane composition of the present invention is a hydrolyzable organosilane compound of the following general formula (2) and/or a partial hydrolytic condensate thereof, is used as a crosslinking agent (curing agent), and releases a cyclic ketone compound such as cyclobutanone or cyclopentanone as a leaving group (leaving substance) by hydrolysis.

In the present invention, the term "partial hydrolytic condensate" means an organosiloxane oligomer which is generated by partially hydrolyzing and condensing the hydrolyzable organosilane compound and has three or more, preferably four or more remaining hydrolyzable groups in the molecule. 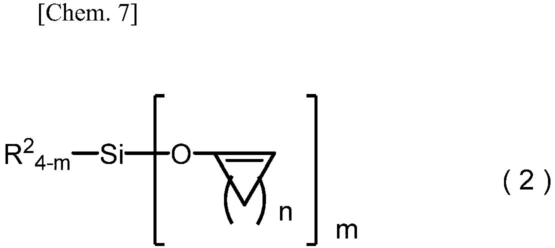 wherein R² is a monovalent hydrocarbon group having 1 to 10 carbon atoms, n is an integer of 1 to 8, and m is 3 or 4.

In the general formula (2), R² is a monovalent hydrocarbon group having 1 to 10 carbon atoms, preferably 1 to 6 carbon atoms, more preferably an alkyl group having 1 to 6 carbon atoms, an alkenyl group having 2 to 6 carbon atoms, an aryl group having 6 to 10 carbon atoms, or an aralkyl group having 7 to 10 carbon atoms, and examples of R² include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; alkenyl groups such as a vinyl group, an allyl groups, a propenyl group, an isopropenyl group, a butenyl group and a hexenyl group; aryl groups such as a phenyl group and a tolyl group; and aralkyl groups such as a benzyl group and a phenylethyl group. Among them, a methyl group, an ethyl group, a vinyl group, and a phenyl group are preferable, and a methyl group, a vinyl group and a phenyl group are particularly preferable.

In the above general formula (2), n is an integer of 1 to 8, preferably an integer of 2 to 6, more preferably an integer of 2 to 4, still more preferably 2 or 3. If n is 0, a cyclic structure is not formed. If n is an integer of 9 or more, the molecular weight of the hydrolyzable organosilane increases, so that purification by distillation becomes difficult, or a disadvantage in terms of cost arises because the amount of addition necessary for securing storage-ability increases.

As described above, m is 3 or 4. If this number is less than 3 (i.e. if m is 0, 1 or 2,), rubber curing through a crosslinking reaction does not occur, and the component is not suitable as a crosslinking agent for a room temperature curable organopolysiloxane composition.

The leaving group (leaving compound) generated by hydrolysis of the hydrolyzable organosilane compound represented of the general formula (2) is a cyclic ketone compound such as cyclopropanone, cyclobutanone, cyclopentanone, cyclohexanone, cycloheptanone, cyclooctanone, cyclononanone or cyclodecanone, preferably cyclobutanone or cyclopentanone, more preferably cyclopentanone. Cyclobutanone and cyclopentanone have not been reported to have health harmfulness to the human body such as carcinogenicity and reproduction toxicity, or environmental harmfulness such as toxicity to aquatic organisms. Since cyclopentanone is industrially mass-produced, and easily obtained, and has high cost competitiveness, cyclopentanone is advantageous for production of a hydrolyzable organosilane compound as the component (B) as described later.

The hydrolyzable organosilane compound as the component (B) can be produced by, for example, reaction (e.g. dehydrochlorination reaction) of a chlorosilane compound corresponding to the hydrolyzable organosilane compound of the general formula (2) as a product and a cyclic ketone compound in the presence of a catalyst and a basic substance. This reaction formula is represented by, for example, the following formula [1]. 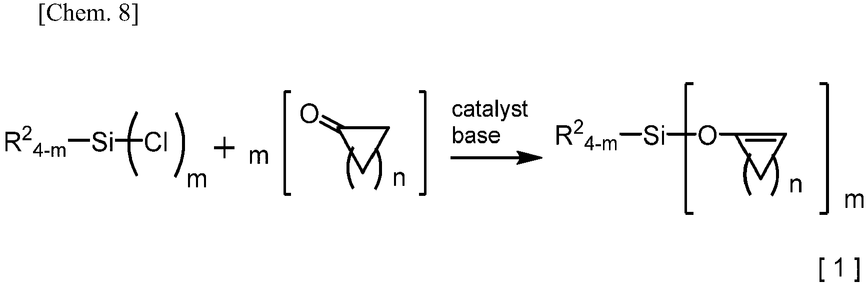 wherein R², n and m are as described above.

Here, examples of the chlorosilane compound include those shown below.

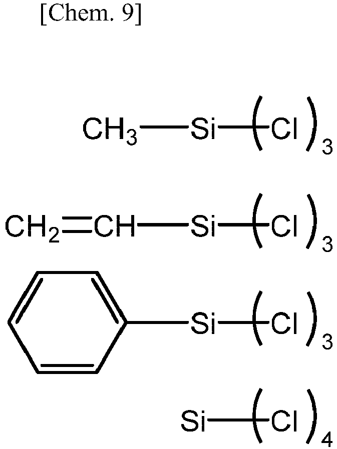

Here, examples of the cyclic ketone compound include those shown below.

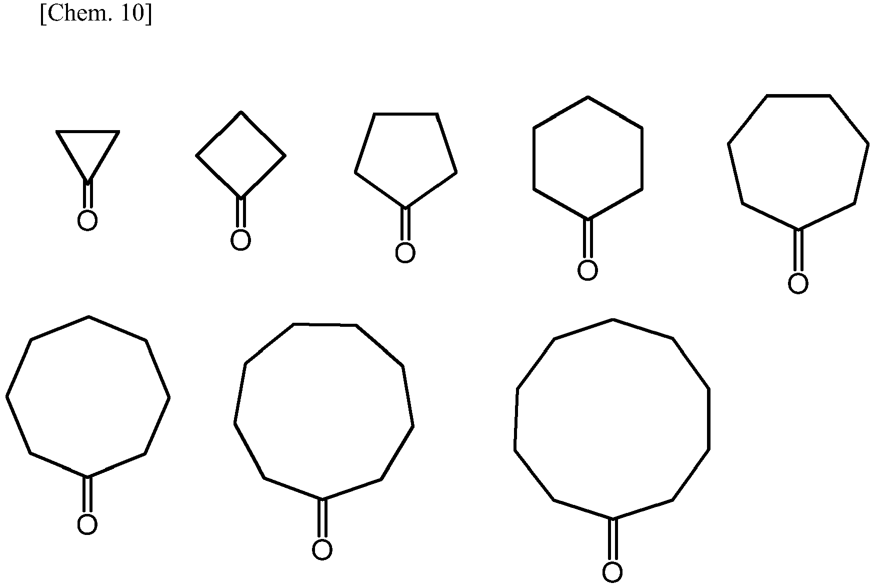

The addition amount of the cyclic ketone compound reacted with the chlorosilane compound is preferably 0.95 to 3.0 mol, more preferably 0.99 to 2.5 mol, still more preferably 1.0 to 2.0 mol per 1 mol of chlorine atoms in the chlorosilane compound. If the addition amount of the cyclic ketone compound is small, there is a possibility that the reaction is not completed, and if the addition amount of the cyclic ketone compound is excessively large, much time may be required for purification, leading to an increase in production time.

Examples of the catalyst used in the reaction include, but are not limited to, monovalent or divalent metal copper compounds, for example, copper chloride, copper bromide, copper iodide, copper sulfate, copper nitrate, copper carbonate, basic copper carbonate, copper formate, copper acetate, and copper butyrate.

The addition amount of the catalyst (metal copper compound) is preferably 0.001 to 0.5 mol, more preferably 0.002 to 0.2 mol, still more preferably 0.003 to 0.1 mol per 1 mol of the chlorosilane compound. If the addition amount of the catalyst is small, there is a possibility that the reaction is not completed, and if the addition amount of the catalyst is excessively large, a disadvantage in terms of cost arises.

As the basic substance used in the reaction, basic substances having low nucleophilicity, such as trimethylamine, triethylamine, tripropylamine, tributylamine, urea, diazabicycloundecene and diazabicyclononene, can be used. Among them, trimethylamine, triethylamine and tributylamine are preferable, and triethylamine is particularly preferable.

The addition amount of the basic substance is preferably 0.95 to 2.5 mol, more preferably 0.99 to 2.0 mol, still more preferably 1.0 to 1.5 mol per 1 mol of chlorine atoms in the chlorosilane compound. If the addition amount of the basic substance is small, there is a possibility that the reaction is not completed, and if the addition amount of the basic substance is excessively large, an economic disadvantage arises.

For production of the hydrolyzable organosilane compound as the component (B), a commonly used solvent may be used, and examples of the solvent include organic solvents, for example, aromatic hydrocarbons such as toluene, xylene and benzene; aliphatic hydrocarbons such as pentane, hexane, heptane, nonane, octane and decane; ethers such as dimethyl ether, methyl ethyl ether, tetrahydrofuran and dioxane; halogenated hydrocarbons such as perchloroethane, perchloroethylene, trichloroethane, chloroform and carbon tetrachloride; amides such as dimethylformamide; and esters such as ethyl acetate, methyl acetate and butyl acetate.

The amount of the solvent used is not particularly limited, and is, typically, in the range of 10 to 500 parts by weight, preferably 30 to 400 parts by weight, more preferably 50 to 300 parts by weight per 100 parts by weight of the cyclic ketone compound used.

For the condition of the reaction between the chlorosilane compound and the cyclic ketone compound, it is preferable that typically, the chlorosilane compound is added dropwise to the cyclic ketone compound at a temperature of 0 to 120°C, preferably 0 to 100°C, and the mixture is reacted at 50 to 120°C, preferably 60 to 100°C for 1 to 48 hours, more preferably for about 3 to 30 hours. If the temperature during the reaction is excessively low, there is a possibility that the reaction is not completed, and if the temperature during the reaction is excessively high, coloring of the product may increase. If the reaction time is excessively short, there is a possibility that the reaction is not completed, and if the reaction time is excessively long, productivity is adversely affected.

Purification after completion of the reaction can be performed by distilling an intended product in a decompression environment, and the decompression degree is preferably 1×10⁻⁵ to 3,000 Pa, more preferably 1×10⁻⁵ to 2,000 Pa, and the temperature during purification is preferably 100 to 250°C, more preferably 120 to 230°C. If the pressure during decompression (decompression degree) is excessively high, distillation may be difficult. If the temperature during purification is excessively low, purification by distillation may be difficult, and an excessively high temperature during purification may cause coloring and decomposition of the reactant.

Specific examples of the hydrolyzable organosilane compound as the component (B) include compounds of the following formula. Me represents a methyl group.

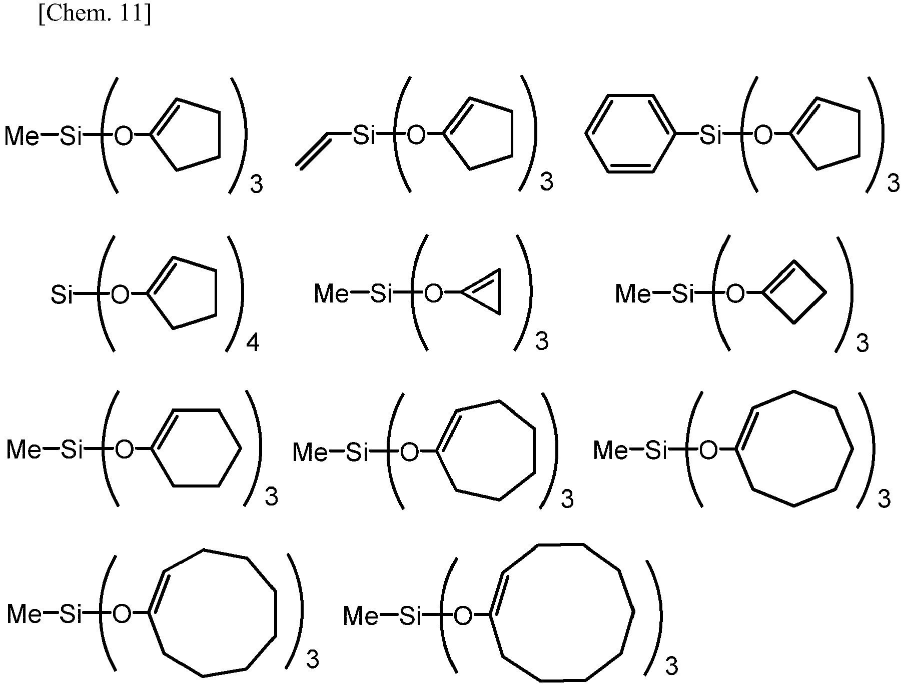

From the viewpoint of rapidity of curing and the like, the component (B) is particularly preferably a novel organosilicon compound (hydrolyzable organosilane compound) of the following general formula (4) which desorbs cyclopentanone as a leaving group (leaving compound) generated by hydrolysis. 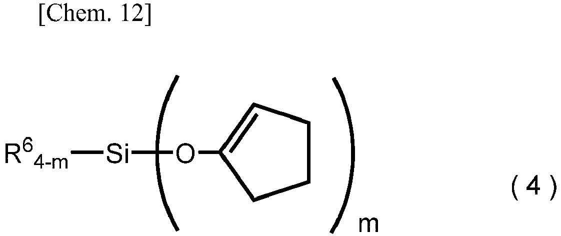 wherein m is the same as described above, R⁶ is a vinyl group or a phenyl group.

Here, in the general formula (1), R⁶ is a vinyl group or a phenyl group, and a vinyl group is particularly preferable.

m is 3 or 4 as described above. If this number is less than 3 (i.e. if m is 0, 1 or 2), rubber curing through a crosslinking reaction does not occur, and the component is not suitable as a crosslinking agent for a condensation curable room temperature curable organopolysiloxane composition.

The hydrolyzable organosilane compound of the present invention can be produced by, for example, reaction (e.g. dehydrochlorination reaction) of a chlorosilane compound and cyclopentanone in the presence of a catalyst and a basic substance. This reaction formula is represented by, for example, the following formula [I]. 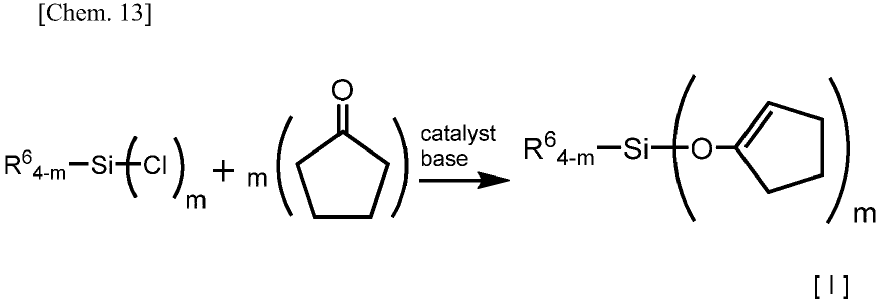 wherein R⁶ and m are as described above.

Here, examples of the chlorosilane compound include those shown below.

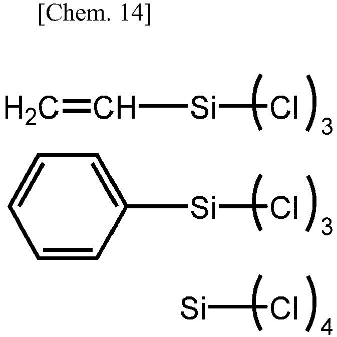

The addition amount of the cyclopentanone reacted with the chlorosilane compound is preferably 0.95 to 3.0 mol, more preferably 0.99 to 2.5 mol, still more preferably 1.0 to 2.0 mol per 1 mol of chlorine atoms in the chlorosilane compound. If the addition amount of the cyclopentanone is small, there is a possibility that the reaction is not completed, and if the addition amount of the cyclopentanone is excessively large, much time is required for purification, leading to an increase in production time.

As the basic substance used in the reaction, basic substances having low nucleophilicity, such as trimethylamine, triethylamine, tripropylamine, tributylamine, urea, diazabicycloundecene and diazabicyclononene, can be used. Among them, trimethylamine, triethylamine and tributylamine are preferable, and triethylamine is particularly preferable.

The addition amount of the basic substance is preferably 0.95 to 2.5 mol, more preferably 0.99 to 2.0 mol, still more preferably 1.0 to 1.5 mol per 1 mol of chlorine atoms in the chlorosilane compound. If the addition amount of the basic substance is small, there is a possibility that the reaction is not completed, and if the addition amount of the basic substance is excessively large, an economic disadvantage arises.

Examples of the catalyst used in the reaction include, but are not limited to, monovalent or divalent metal copper compounds and metal silver compounds, for example, copper chloride, copper bromide, copper iodide, copper sulfate, copper nitrate, copper carbonate, basic copper carbonate, copper formate, copper acetate, copper butyrate, silver chloride, silver iodide, silver sulfate, silver nitrate, silver carbonate, basic silver carbonate, silver formate, silver acetate and silver butyrate.

The addition amount of the catalyst (metal copper compound and metal silver compound) is preferably 0.001 to 0.5 mol, more preferably 0.002 to 0.2 mol, still more preferably 0.003 to 0.1 mol per 1 mol of the chlorosilane compound. If the addition amount of the catalyst is small, there is a possibility that the reaction is not completed, and if the addition amount of the catalyst is excessively large, a disadvantage in terms of cost arises.

For production of the hydrolyzable organosilane compound of the present invention, a commonly used solvent may be used, and examples thereof include organic solvents, for example, aromatic hydrocarbons such as toluene, xylene and benzene; aliphatic hydrocarbons such as pentane, hexane, heptane, nonane, octane and decane; ethers such as dimethyl ether, methyl ethyl ether, tetrahydrofuran and dioxane; halogenated hydrocarbons such as perchloroethane, perchloroethylene, trichloroethane, chloroform and carbon tetrachloride; amides such as dimethylformamide; and esters such as ethyl acetate, methyl acetate and butyl acetate.

The amount of the solvent used is not particularly limited, and is, typically, in the range of 10 to 500 parts by weight, preferably 30 to 400 parts by weight, more preferably 50 to 300 parts by weight per 100 parts by weight of the cyclopentanone used.

For the condition of the reaction between the chlorosilane compound and the cyclopentanone, it is preferable that typically, the chlorosilane compound is added dropwise to the cyclopentanone at a temperature of 0 to 130°C, preferably 20 to 120°C, and the mixture is reacted at 50 to 140°C, preferably 60 to 130°C for 0.5 to 48 hours, preferably for about 1 to 30 hours. If the temperature during the reaction is excessively low, there is a possibility that the reaction is not completed, and if the temperature during the reaction is excessively high, coloring of the product may increase. If the reaction time is excessively short, there is a possibility that the reaction is not completed, and if the reaction time is excessively long, productivity is adversely affected.

Purification after completion of the reaction can be performed by distilling an intended product in a decompression environment, and the decompression degree is preferably 1×10⁻⁵ to 3,000 Pa, more preferably 1×10⁻⁵ to 2,000 Pa, and the temperature during purification is preferably 100 to 250°C, more preferably 120 to 230°C. If the pressure during decompression (decompression degree) is excessively high, distillation may be difficult. If the temperature during purification is excessively low, purification by distillation may be difficult, and an excessively high temperature during purification may cause coloring and decomposition of the reactant.

Specific examples of the hydrolyzable organosilane compound of the present invention include compounds of the following formula.

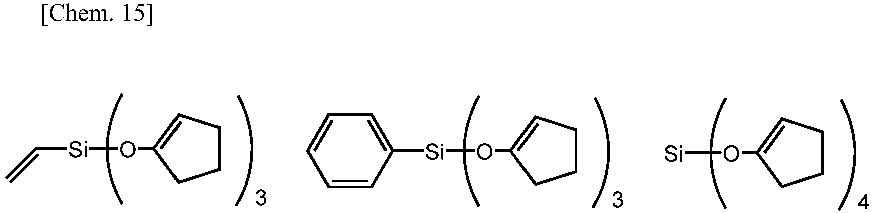

If an organosilicon compound (hydrolyzable organosilane compound) which desorbs cyclopentanone as such a leaving group (leaving compound) generated by hydrolysis is used as a crosslinking agent (curing agent) for the room temperature curable organopolysiloxane composition, it is possible to give a cured product which has rapidity of curing, in particular, and is excellent in rubber physical properties. Cyclopentanone is a compound which has lower harmfulness to the human body and environment and better biodegradability as compared to methanol and 2-butanone oxime.

The novel hydrolyzable organosilane compound of the present invention contains cyclopentanone as a leaving group (leaving compound) generated by hydrolysis, and is particularly suitably used as a crosslinking agent for the room temperature curable organopolysiloxane composition.

If the crosslinking agent for the room temperature curable organopolysiloxane composition is such a hydrolyzable organosilane compound, higher safety and rapidity of curing can be imparted.

By using, as a crosslinking agent (curing agent), a hydrolyzable organosilane compound which releases cyclopentanone having a higher safety as a leaving group (leaving compound) generated by hydrolysis, a condensation curable room temperature curable organosiloxane composition can be obtained which gives a cured product excellent in rubber physical properties and has rapidity of curing.

The components (B) may be used alone or used in combination of two or more thereof.

The compounding amount of the component (B) is 1 to 40 parts by weight, preferably 3 to 30 parts by weight, more preferably 5 to 20 parts by weight per 100 parts by weight of the component (A). If the compounding amount of the component (B) is less than 1 part by weight as the lower limit value, storage-ability during storage in a sealed container may be deteriorated. If the compounding amount of the component (B) is more than 40 parts by weight as the upper limit value, there is a possibility that the curability of the room temperature curable organopolysiloxane composition is significantly deteriorated, and the adhesive property is deteriorated.

The hydrolyzable organosilane compound and/or the partial hydrolytic condensate thereof as the component (B) are clearly distinct from a silane coupling agent and/or a partial hydrolytic condensate thereof as a component (D) as an optional component described later in that the component (B) does not have a monovalent hydrocarbon group having at least one functional group containing one or more atoms selected from a nitrogen atom, a sulfur atom and an oxygen atom in the molecule.

### [Component (C) Curing catalyst]

In the room temperature curable organopolysiloxane composition of the present invention, a curing catalyst as a component (C) can be blended as an optional component if necessary. As the curing catalyst as the component (C), a metallic or nonmetallic condensation catalyst generally used heretofore as a curing accelerator for a room temperature curable organopolysiloxane composition can be used. Examples thereof include organotin compounds (tin catalysts) such as dibutyltin methoxide, dibutyltin diacetate, dibutyltin dioctate, dibutyltin dilaurate, dioctyltin dilaurate, dioctyltin dioctate, dimethyltin dimethoxide and dimethyltin diacetate; organotitanium compounds (titanium catalysts) such as tetrapropyl titanate, tetrabutyl titanate, tetra-2-ethylhexyl titanate, dimethoxytitanium diacetylacetonate and titanium diisopropoxybis(ethylacetoacetate); amine compounds such as triethylamine, hexylamine, tetramethylguanidine and γ-tetramethylguanidylpropyltrimethoxysilane and salts thereof (organic strong base catalysts); and organobismuth compounds such as bismuth(2-ethylhexanoate) and bismuth(neodecanoate) and mixtures thereof (organobismuth catalysts). At least any one of these compounds can be used, i.e. the compounds can be used alone or in combination of two or more thereof.

In the present invention, curability and cured product performance equivalent to those when a tin catalyst is blended are exhibited by compounding any of a titanium catalyst, an organic strong base catalyst and an organobismuth catalyst among the above-described catalysts, and therefore from the viewpoint of environmental protection, it is preferable that a tin catalyst is not blended, and a titanium catalyst, an organic strong base catalyst or an organobismuth catalyst is blended.

The compounding amount of the component (C) which may be blended is preferably 0.01 to 10 parts by weight, more preferably 0.05 to 8 parts by weight, still more preferably 0.1 to 5 parts by weight per 100 parts by weight of the component (A). If the compounding amount of the component (E) is less than 0.01 parts by weight as the lower limit value, there is a possibility that a catalytic effect cannot be obtained, and if the compounding amount of the component (E) is more than 10 parts by weight as the upper limit value, the composition may have poor storage stability.

### [Component (D) Silane coupling agent and/or partial hydrolytic condensate thereof]

In the room temperature curable organopolysiloxane composition of the present invention, a silane coupling agent and/or a partial hydrolytic condensate thereof as a component (D) can be blended as an optional component if necessary. The component (D) is a silane coupling agent of the following general formula (3) (i.e. a hydrolyzable organosilane compound having a functional group-containing monovalent hydrocarbon group or a carbon functional silane) and/or a partial hydrolytic condensate thereof, which is a component for exhibiting good adhesive property in a cured product of the room temperature curable organopolysiloxane composition of the present invention.

R³R⁴_{b}SiX_{3-b} (3)

wherein R³ is a monovalent hydrocarbon group having 1 to 20 carbon atoms and having at least one functional group (with exclusion of a guanidyl group) containing one or more heteroatoms selected from a nitrogen atom, a sulfur atom and an oxygen atom; R⁴ is an unsubstituted or substituted monovalent hydrocarbon group having 1 to 10 carbon atoms, and X is a hydrolyzable group; and b is 0, 1 or 2.

In the formula (3), R³ represents a monovalent hydrocarbon group having 1 to 20 carbon atoms and having at least one functional group containing one or more heteroatoms selected from a nitrogen atom, a sulfur atom, and an oxygen atom (e.g. an unsubstituted or substituted amino group, an unsubstituted or substituted imino group, an amide group, a ureido group, a mercapto group, an epoxy group or a (meth)acryloxy group, with the exclusion of a guanidyl group), and specific examples thereof include monovalent hydrocarbon groups having preferably 3 to 20, more preferably 3 to 14 carbon atoms and containing at least one heteroatom selected from a nitrogen atom, a sulfur atom and an oxygen atom, such as β-(2,3-epoxycyclohexyl)ethyl group, a β-(3,4-epoxycyclohexyl)ethyl group, a γ-glycidoxypropyl group, a γ-methacryloxypropyl group, a γ-acryloxypropyl group, a N-β-(aminoethyl)-γ-aminopropyl group [another name: N-2-(aminoethyl)-3-aminopropyl group], a γ-aminopropyl group, a N-phenyl-γ-aminopropyl group, a γ-ureidopropyl group, a γ-mercaptopropyl group and a γ-isocyanatopropyl group. R⁵ is particularly preferably a γ-glycidoxypropyl group, a γ-aminopropyl group or a N-β-(aminoethyl)-γ-aminopropyl group.

In the above formula (3), R⁴ is an unsubstituted or substituted monovalent hydrocarbon group having 1 to 10 carbon atoms, preferably 1 to 6 carbon atoms, and examples thereof include alkyl groups such as a methyl group, an ethyl group, a propyl group, an isopropyl group, a butyl group, an isobutyl group, a sec-butyl group, a tert-butyl group, a pentyl group, a hexyl group, an octyl group, a 2-ethylhexyl group, a nonyl group and a decyl group; cycloalkyl groups such as a cyclohexyl group; alkenyl groups such as a vinyl group, an allyl group, a propenyl group, an isopropenyl group, a butenyl group and a hexenyl group; aryl groups such as a phenyl group and a tolyl group; and aralkyl groups such as a benzyl group and a phenylethyl group. Alternatively, groups in which a part of hydrogen atoms of any of the above-mentioned hydrocarbon groups is replaced by a halogen atom or the like such as chlorine, fluorine or bromine, for example, a trifluoropropyl group or the like are mentioned. Among them, a methyl group, an ethyl group, a propyl group and an isopropyl group are preferable. R⁴s may be the same group or different groups.

In the formula (3), examples of the hydrolyzable group X include a ketoxime group, an alkoxy group, an alkoxyalkoxy group, an acyloxy group, and an alkenyloxy group. Specific examples thereof include ketoxime groups having 3 to 8 carbon atoms, such as a dimethylketoxime group, a diethylketoxime group, a methylethylketoxime group and a methylisobutylketoxime group; alkoxy groups having 1 to 4, preferably 1 or 2 carbon atoms, such as a methoxy group, an ethoxy group, a propoxy group, an isopropoxy group, a butoxy group, an isobutoxy group, a sec-butoxy group and a tert-butoxy group; alkoxyalkoxy groups having 2 to 4 carbon atoms, such as a methoxymethoxy group and a methoxyethoxy group; acyloxy groups having 2 to 4 carbon atoms, such as an acetoxy and a propionoxy group; and alkenyloxy groups having 2 to 4 carbon atoms, such as a vinyloxy group, an allyloxy group, a propenoxy group and an isopropenoxy group. X is preferably a methoxy group. The hydrolyzable groups X may be the same group or different groups.

Specific examples of the silane coupling agent of formula (3) as the component (D) include aminosilanes such as γ-aminopropyltrimethoxysilane, γ-aminopropyltriethoxysilane and 3-2-(aminoethylamino)propyltrimethoxysilane [another name: N-2-(aminoethyl)-3-aminopropyltrimethoxysilane]; epoxysilanes such as γ-glycidoxypropyltrimethoxysilane and β-(3,4-epoxycyclohexyl)ethyltrimethoxysilane; (meth)acrylsilanes such as γ-(meth)acryloxypropyltrimethoxysilane and γ-(meth)acryloxypropyltriethoxysilane; mercaptosilanes such as γ-mercaptopropyltrimethoxysilane; and isocyanates such as γ-isocyanatopropyltrimethoxysilane.

The silane coupling agents and/or partial hydrolytic condensates thereof as the component (D) may be used alone or used in combination of two or more thereof.

The compounding amount of the component (D) which may be blended is preferably 0.01 to 10 parts by weight, more preferably 0.1 to 8 parts by weight per 100 parts by weight of the component (A). If the compounding amount of the component (D) is less than 0.01 parts by weight, there is a possibility that a cured product does not exhibit sufficient adhesive performance, and if the compounding amount of the component (D) is more than 10 parts by weight, there is a possibility that rubber strength after curing decreases, or curability is deteriorated.

### [Component (E) Inorganic filling agent]

In the room temperature curable organopolysiloxane composition of the present invention, an inorganic filling agent as a component (E) can be blended as an optional component if necessary. The inorganic filling agent as the component (E) is a reinforcing or non-reinforcing filling agent for imparting rubber physical properties to the room temperature curable organopolysiloxane composition of the present invention. Examples of the inorganic filling agent as the component (E) include silica-based filling agents such as dry silica such as pyrogenic silica, fused silica, crushed silica and fumed silica, wet silica such as precipitated silica and sol-gel process silica and crystalline silica (fine powder quartz), diatomaceous earth, carbon black, talc and bentonite which are surface-hydrophobized or untreated, surface-treated or untreated calcium carbonate, zinc carbonate and magnesium carbonate, and surface-treated or untreated calcium oxide, zinc oxide, magnesium oxide, aluminum oxide and aluminum hydroxide, and among them, calcium carbonate, fumed silica, precipitated silica, carbon black and aluminum oxide are preferable, and surface-hydrophobized calcium carbonate, fumed silica, precipitated silica, carbon black and aluminum oxide are more preferable. In this case, the amount of moisture in these inorganic filling agents is preferably small.

The type, amount and surface-treating method and the like of the surface treatment agent (hydrophobizing agent) are not particularly limited, and typically, organosilicon compounds such as chlorosilane, alkoxysilane and organosilazane, and treatment agents such as fatty acid, paraffin, silane coupling agents and titanium coupling agents can be applied.

The inorganic filling agents as the components (E) may be used alone or used in combination of two or more thereof.

The compounding amount of the component (E) which may be blended is preferably 1 to 500 parts by weight, more preferably 20 to 500 parts by weight, still more preferably 20 to 300 parts by weight, particularly preferably 50 to 300 parts by weight per 100 parts by weight of the component (A). If the compounding amount of the component (E) is less than 1 part by weight, there may be a problem of being unsuitable for a use purpose because sufficient rubber strength cannot be obtained, and if the compounding amount of the component (E) is more than 500 parts by weight, there is a possibility that the discharge property from a cartridge is deteriorated, storage stability is deteriorated, and mechanical properties in rubber physical properties obtained are deteriorated.

### [Other components]

In addition, in the room temperature curable organopolysiloxane composition of the present invention, generally known additives may be used in addition to the above-described components as long as the purpose of the present invention is not impaired. Examples of the additive include polyether as a thixotropy improver, silicone oil (non-functional organopolysiloxane) and isoparaffin as a plasticizer. If necessary, colorants such as pigments, dyes and fluorescent brighteners, bioactive additives such as antifungal agents, antibacterial agents and marine organism repellents, surface modifiers such as phenyl silicone oil, fluorosilicone oil, and an organic liquid incompatible with silicone as bleed oil, and solvents such as solvent volatile oil and low-boiling-point isoparaffin can also be added.

The room temperature curable organopolysiloxane composition of the present invention can be obtained by uniformly mixing the above-described components, and further, predetermined amounts of the above-described various additives in a dry atmosphere. The room temperature curable organopolysiloxane composition of the present invention is cured by leaving the composition to stand at room temperature, and as the molding method, curing conditions and the like for the composition, a known method and known conditions appropriate to the type of the composition can be adopted.

The room temperature curable organopolysiloxane composition of the present invention, particularly a one-pack type composition, is stored in the absence of moisture, i.e. in a sealed container which cut off humidity, and easily cured at room temperature (23°C ± 15°C) by exposing to moisture in air when using.

The room temperature curable organopolysiloxane composition of the present invention is friendly to the human body and the environment as the compound generated from a crosslinking agent through a hydrolysis reaction during curing is a cyclic ketone compound having high safety, such as cyclopentanone. Further, cyclopentanone has high safety as it has a burning point of 35°C, which is higher than that of a dealcoholization-type compound that releases an alcohol compound such as methanol during curing of the composition. The room temperature curable organopolysiloxane composition of the present invention exhibits good curability with the use of various existing catalysts, and a cured product thereof (silicone rubber) is excellent in adhesive property. A composition having further reduced environmental hazardousness can be provided by using a non-silver catalyst.

Therefore, the room temperature curable organopolysiloxane composition of the present invention is useful as an adhesive agent, a sealing material, a potting agent, a coating agent or the like. The method for using the room temperature curable organopolysiloxane composition of the present invention as an adhesive agent, a sealing material, a potting agent or a coating agent may follow a heretofore known method.

Examples of the relevant article include automobile parts, automobile oil seals, electrical or electronic parts, building structures, and civil engineering structures.

### EXAMPLES

Hereinafter, the present invention is described in more detail by showing Synthesis Examples, Examples and Comparative Examples, and also Examples of Synthesis, Composition Examples, and Composition Comparative Examples, but the present invention is not limited by these Examples and Examples of Synthesis. The viscosity is a value measured at 23°C with a rotational viscometer in accordance with the method specified in JIS Z 8803. Me represents a methyl group.

### [Synthesis Example 1] Synthesis of hydrolyzable organosilane compound 1

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine, 5 g (0.05 mol) of copper (I) chloride and 1,500 ml of hexane, and 400 g (2.47 mol) of vinyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 180°C and 300 Pa to obtain a hydrolyzable organosilane compound 1 (yield 532 g, yield coefficient 69%). This reaction formula is represented by, for example, the following formula [2].

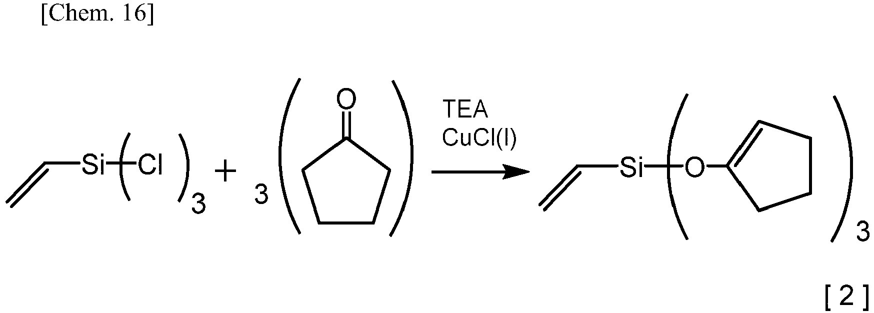

### [Synthesis Example 2] Synthesis of hydrolyzable organosilane compound 2

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine, 5 g (0.05 mol) of copper (I) chloride and 1,500 ml of hexane, and 368 g (2.47 mol) of methyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 170°C and 300 Pa to obtain a hydrolyzable organosilane compound 2 (yield 519 g, yield coefficient 71%). This reaction formula is represented by, for example, the following formula [3].

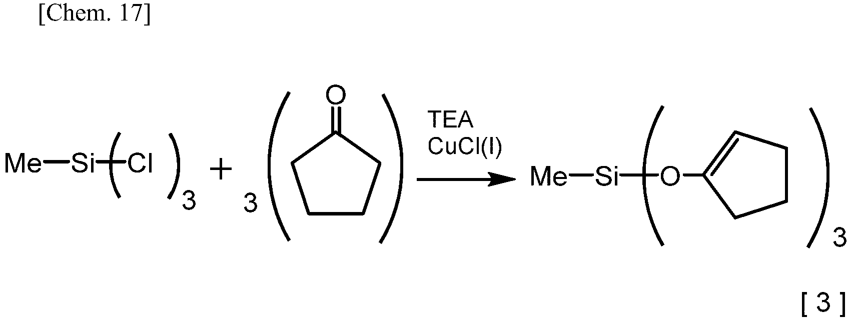

### [Synthesis Example 3] Synthesis of hydrolyzable organosilane compound 3

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine, 5 g (0.05 mol) of copper (I) chloride and 1,500 ml of hexane, and 522 g (2.47 mol) of phenyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 200°C and 300 Pa to obtain a hydrolyzable organosilane compound 3 (yield 568 g, yield coefficient 65%). This reaction formula is represented by, for example, the following formula [4].

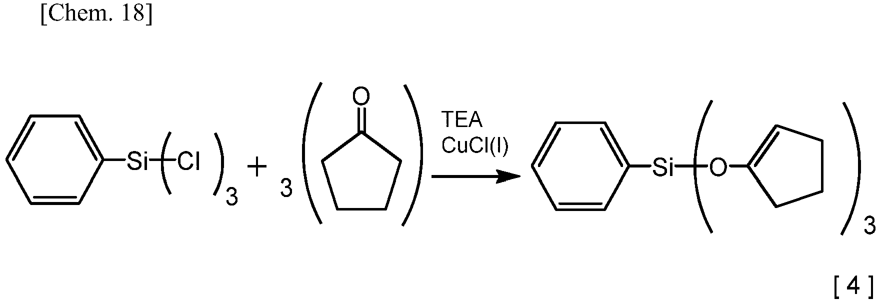

### [Example 1]

To (A) 100 parts by weight of linear dimethylpolysiloxane which has a viscosity of 20,000 mPa-s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-1) 0.1 parts by weight of dioctyltin dilaurate were added, and the mixture was thoroughly mixed under reduced pressure to obtain a composition 1.

### [Example 2]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-2) 1 part by weight of γ-glycidoxypropyltrimethoxysilane (product name; KBM-403, manufactured by Shin-Etsu Chemical Co., Ltd.) and (C-2) 4 parts by weight of titaniumdiisopropoxybis(ethylacetoacetate) (product name; ORGATIX TC750, manufactured by Matsumoto Fine Chemical Co., Ltd.) were added, and the mixture was thoroughly mixed under reduced pressure to obtain a composition 2.

### [Example 3]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-3) 1 part by weight of N-2-(aminoethyl)-3-aminopropyltrimethoxysilane (product name; KBM-603, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 3.

### [Example 4]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B-1) 8 parts by weight of the hydrolyzable organosilane compound 1 was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-4) 1 part by weight of an organobismuth catalyst (product name; NEOSTANN U-600, manufactured by Nitto Kasei Co., Ltd.) containing bismuthtris(2-ethylhexanoate) as a principal component were added, and the mixture was thoroughly mixed under reduced pressure to obtain a composition 4.

### [Example 5]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B-2) 8 parts by weight of the hydrolyzable organosilane compound 2 was then added, and the mixture was sufficiently mixed. Finally, (D-3) 1 part by weight of N-2-(aminoethyl)-3-aminopropyltrimethoxysilane (product name; KBM-603, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 5.

### [Example 6]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B-3) 8 parts by weight of the hydrolyzable organosilane compound 3 was then added, and the mixture was sufficiently mixed. Finally, (D-3) 1 part by weight of N-2-(aminoethyl)-3-aminopropyltrimethoxysilane (product name; KBM-603, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 6.

### [Comparative Example 1]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B') 10 parts by weight of methyltrismethylethylketoximesilane was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-1) 0.1 parts by weight of dioctyltin dilaurate were added, and the mixture was thoroughly mixed under reduced pressure to obtain a composition 7.

### [Comparative Example 2]

To (A') 100 parts by weight of linear dimethylpolysiloxane which has a viscosity of 20,000 mPa·s at 23°C and in which both ends of the molecular chain are blocked with methyldimethoxy groups (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B') 10 parts by weight of methyltrismethylethylketoximesilane was then added, and the mixture was sufficiently mixed. Finally, (D-2) 1 part by weight of γ-glycidoxypropyltrimethoxysilane (product name; KBM-403, manufactured by Shin-Etsu Chemical Co., Ltd.) and (C-2) 4 parts by weight of titaniumdiisopropoxybis(ethylacetoacetate) (product name; ORGATIX TC750, manufactured by Matsumoto Fine Chemical Co., Ltd.) were added, and the mixture was thoroughly mixed under reduced pressure to obtain a composition 8.

### [Comparative Example 3]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of fumed silica whose surface is treated with dimethyldichlorosilane (product name: MU-215, manufactured by Shin-Etsu Chemical Co., Ltd.) were added, the mixture was sufficiently mixed, (B") 10 parts by weight of methyltrimethoxysilane was then added, and the mixture was sufficiently mixed. Finally, (D-1) 1 part by weight of γ-aminopropyltrimethoxysilane (product name; KBM-903, manufactured by Shin-Etsu Chemical Co., Ltd.) and (C-4) 1 part by weight of an organobismuth catalyst (product name; NEOSTANN U-600, manufactured by Nitto Kasei Co., Ltd.) containing bismuthtris(2-ethylhexanoate) as a principal component were added, and the mixture was thoroughly mixed under reduced pressure to obtain a composition 9.

### [Comparative Example 4]

To (A) 100 parts by weight of linear dimethylpolysiloxane which has a viscosity of 20,000 mPa·s at 23°C and in which both ends of the molecular chain are blocked with silanol groups (hydroxyl group bonded to a silicon atom) (dimethylpolysiloxane of the general formula (1), where R¹ is a methyl group and a is about 620), (E-1) 100 parts by weight of heavy calcium carbonate whose surface is treated with a paraffin-based agent (product name; MC COAT P-20, manufactured by Maruo Calcium Co., Ltd.) and (E-2) 10 parts by weight of haze silica whose surface is treated with dimethyldichlorosilane (product name: MU-215, manufactured by Shin-Etsu Chemical Co., Ltd.) were added, the mixture was sufficiently mixed, (B‴) 8 parts by weight of vinyltrisisopropoxysilane was then added, and the mixture was sufficiently mixed. Finally, (D-3) 1 part by weight of N-2-(aminoethyl)-3-aminopropyltrimethoxysilane (product name; KBM-603, manufactured by Shin-Etsu Chemical Co., Ltd.) and (C-3) 0.6 parts by weight of γ-tetramethylguanidylpropyltrimethoxysilane were added, and the mixture was thoroughly mixed under reduced pressure to obtain a composition 10.

### [Test method]

Evaluation was performed as follows for the compositions (room temperature curable organopolysiloxane compositions) prepared in Examples 1 to 6 and Comparative Examples 1 to 4. Table 1 shows the following evaluation results together with the compounding amounts in Examples 1 to 6 and Comparative Examples 1 to 4.

### (Initial evaluation)

As initial evaluation, the following tack free time, curing rate, rubber physical properties and adhesive property were evaluated using the compositions immediately after the preparation.

### Tack-free time

Using each of the compositions prepared in Examples and Comparative Examples, the tack-free time (skin-over time) was measured in accordance with the method specified in JIS A 5758.

### Curing rate

In the test method for the curing rate, each of the compositions prepared in Examples and Comparative Examples was filled into a glass petri dish having an inner diameter of 10 mm, and left standing at 23°C and 50% RH for 1 day (24 hours), and a probe was then inserted to measure the thickness (depth) of curing from a portion that was in contact with air.

### Rubber physical properties

Each of the compositions prepared in Examples and Comparative Examples was poured into a 2 mm mold and aged at 23°C and 50% RH for 7 days to obtain a rubber sheet having a thickness of 2 mm. Rubber physical properties (type A durometer hardness, tensile strength, elongation at break) were measured in accordance with JIS K 6249.

### Adhesive property

Each of the compositions prepared in Examples and Comparative Examples was cured by aging the composition between two aluminum plates having a width of 25 mm and a length of 100 mm at 23°C and 50% RH for 7 days, so that a silicone rubber cured product layer bonded to each of the upper and lower aluminum plates by an area of 2.5 cm² and a thickness of 1 mm was formed to produce a shear adhesion test specimen. Using each of the test specimens, the shear adhesive strength to aluminum and the cohesive fracture ratio were measured in accordance with the method specified in JIS K 6249.

### (Evaluation of resistance to moist heat)

For examining resistance to moist heat, the cured silicone rubber sheet and shear adhesion test specimen obtained were exposed to an environment at 85°C and 85% RH, degraded for 1,000 hours, and then subjected to the same test as in the initial stage of production (initial evaluation) (rubber physical properties and adhesive property) to conduct a test for examination of resistance to moist heat.

### (Evaluation of heat resistance)

For examining heat resistance, the cured silicone rubber sheet and shear adhesion test specimen obtained were exposed to an environment at 150°C, degraded for 1,000 hours, and then subjected to the same test as in the initial stage of production (initial evaluation) (rubber physical properties and adhesive property) to conduct a test for examination of heat resistance.

**[Table 1]**

| Amount of blending (parts by weight) | | | Example | | | | | |
|---|---|---|---|---|---|---|---|---|
| | | | 1 | 2 | 3 | 4 | 5 | 6 |
| A | Silanol group blocking dimethylpolysiloxane | | 100 | 100 | 100 | 100 | 100 | 100 |
| A' | Methyldimethoxy group blocking dimethylpolysiloxane | | | | | | | |
| B-1 | Hydrolyzable organosilane compound 1 | | 8 | 8 | 8 | 8 | | |
| B-2 | Hydrolyzable organosilane compound 2 | | | | | | 8 | |
| B-3 | Hydrolyzable organosilane compound 3 | | | | | | | 8 |
| B' | Methyltrimethyethylketoximesilane | | | | | | | |
| B" | Methyltrimethoxysilane | | | | | | | |
| B‴ | Vinyltrisisopropenoxysilane | | | | | | | |
| C-1 | Dioctyltin dilaurate | | 0.1 | | | | | |
| C-2 | Titaniumdiisopropoxybis(ethylacetoacetate) | | | 4 | | | | |
| C-3 | γ-tetramethylguanidylpropyltrimethoxysilane | | | | 0.6 | | 0.6 | 0.6 |
| C-4 | Organobismuth catalyst containing bismuthtris(2-ethylhexanoate) as a principal component | | | | | 1 | | |
| D-1 | γ-aminopropyltrimethoxysilane | | 1 | | | 1 | | |
| D-2 | γ-glycidoxypropyltrimethoxysilane | | | 1 | | | | |
| D-3 | N-2-(aminoethyl)-3-aminopropyltrimethoxysilane | | | | 1 | | 1 | 1 |
| E-1 | Heavy calcium carbonate | | 100 | 100 | 100 | 100 | 100 | 100 |
| E-2 | Fumed silica | | 10 | 10 | 10 | 10 | 10 | 10 |

| Evaluation result | | | | | | | | |
|---|---|---|---|---|---|---|---|---|
| Tack-free time (min) | | Initial | 3 | 8 | 3 | 6 | 5 | 3 |
| Curing rate (mm/24 h) | | Initial | 2.8 | 2.2 | 2.7 | 2.1 | 2.6 | 2.9 |
| Hardness (type A durometer) | | Initial | 51 | 36 | 52 | 41 | 50 | 51 |
| | | Durability at 85°C/85% RH | 27 | 11 | 24 | 16 | 28 | 22 |
| | | Durability at 150°C | 48 | 31 | 48 | 32 | 47 | 46 |
| Tensile strength (MPa) | | Initial | 2.2 | 1.9 | 2.4 | 1.6 | 2.3 | 2.3 |
| | | Durability at 85°C/85% RH | 1.1 | 0.9 | 1.2 | 0.8 | 1.0 | 1.1 |
| | | Durability at 150°C | 2.4 | 1.6 | 2.6 | 1.4 | 2.3 | 2.2 |
| Elongation at break (%) | | Initial | 350 | 540 | 370 | 490 | 410 | 420 |
| | | Durability at 85°C/85% RH | 590 | 360 | 660 | 410 | 710 | 720 |
| | | Durability at 150°C | 320 | 480 | 360 | 420 | 400 | 390 |
| Shear adhesive strength (MPa) | | Initial | 1.6 | 1.5 | 1.6 | 1.4 | 1.5 | 1.5 |
| | | Durability at 85°C/85% RH | 1.0 | 0.7 | 0.9 | 0.8 | 1.0 | 0.9 |
| | | Durability at 150°C | 1.7 | 1.2 | 1.7 | 1.3 | 1.6 | 1.7 |
| Cohesive fracture ratio (%) | | Initial | 100 | 100 | 100 | 100 | 100 | 100 |
| | | Durability at 85°C/85% RH | 100 | 100 | 100 | 100 | 100 | 100 |
| | | Durability at 150°C | 100 | 100 | 100 | 100 | 100 | 100 |
| Compound desorbed during curing | | | Cyclopentanone | Cyclopentanone | Cyclopentanone | Cyclopentanone | Cyclopentanone | Cyclopentanone |
| Health harmfulness or environmental harmfulness of desorbed compound | | | None | None | None | None | None | None |
| Burning point of desorbed compound (°C) | | | 35 | 35 | 35 | 35 | 35 | 35 |

**[Table 2]**

| Amount of blending (parts by weight) | | | Comparative Example | | | |
|---|---|---|---|---|---|---|
| | | | 1 | 2 | 3 | 4 |
| A | Silanol group blocking dimethylpolysiloxane | | 100 | | 100 | 100 |
| A' | Methyldimethoxy group blocking dimethylpolysiloxane | | | 100 | | |
| B-1 | Hydrolyzable organosilane compound 1 | | | | | |
| B-2 | Hydrolyzable organosilane compound 2 | | | | | |
| B-3 | Hydrolyzable organosilane compound 3 | | | | | |
| B' | Methyltrimethyethylketoximesilane | | 10 | | | |
| B" | Methyltrimethoxysilane | | | 10 | 10 | |
| B‴ | Vinyltrisisopropenoxysilane | | | | | 8 |
| C-1 | Dioctyltin dilaurate | | 0.1 | | | |
| C-2 | Titaniumdiisopropoxybis(ethylacetocetate) | | | 4 | | |
| C-3 | γ-tetramethylguanidylpropyltrimethoxysilane | | | | | 0.6 |
| C-4 | Organobismuth catalyst containing bismuthtris(2-ethylhexanoate) as a principal component | | | | 1 | |
| D-1 | γ-aminopropyltrimethoxysilane | | 1 | | 1 | |
| D-2 | γ-glycidoxypropyltrimethoxysilane | | | 1 | | |
| D-3 | N-2-(aminoethyl)-3-aminopropyltrimethoxysilane | | | | | 1 |
| E-1 | Heavy calcium carbonate | | 100 | 100 | 100 | 100 |
| E-2 | Fumed silica | | 10 | 10 | 10 | 10 |

| Evaluation result | | | | | | |
|---|---|---|---|---|---|---|
| Tack-free time (min) | | Initial | 8 | 10 | 60 min or more | 3 |
| Curing rate (mm/24 h) | | Initial | 2.1 | 1.9 | Uncured | 2.5 |
| Hardness (type A durometer) | | Initial | 48 | 36 | | 52 |
| | | Durability at 85°C/85% RH | 22 | 9 | | 22 |
| | | Durability at 150°C | 48 | 24 | | 45 |
| Tensile strength (MPa) | | Initial | 2.1 | 1.9 | | 1.9 |
| | | Durability at 85°C/85% RH | 1.0 | 0.7 | | 0.7 |
| | | Durability at 150°C | 2.2 | 1.1 | | 1.1 |
| Elongation at break (%) | | Initial | 340 | 480 | | 390 |
| | | Durability at 85°C/85% RH | 500 | 440 | | 650 |
| | | Durability at 150°C | 290 | 480 | | 330 |
| Shear adhesive strength (MPa) | | Initial | 1.6 | 1.4 | | 1.6 |
| | | Durability at 85°C/85% RH | 1.0 | 0.5 | | 0.8 |
| | | Durability at 150°C | 1.8 | 1.0 | | 1.7 |
| Cohesive fracture ratio (%) | | Initial | 100 | 100 | | 100 |
| | | Durability at 85°C/85% RH | 100 | 60 | | 100 |
| | | Durability at 150°C | 100 | 100 | | 100 |
| Compound desorbed during curing | | | 2-butanone oxime | Methanol | Methanol | Acetone |
| Health harmfulness or environmental harmfulness of desorbed compound | | | Possibly carcinogenic, harmful to aquatic organisms | Deleterious substance, damage to organ | Deleterious substance, damage to organ | Damage to organ |
| Burning point of desorbed compound (°C) | | | 58 | 11 | 11 | -20 |

From the above results, it has been shown that regardless of whether a tin catalyst, a titanium catalyst, an organic strong base catalyst or an organobismuth catalyst is used, the room temperature curable organopolysiloxane composition of the present invention has good curability (tack-free time and curing rate), rubber physical properties and adhesive property in the initial evaluation, and has good characteristics in the test for resistance to moist heat and the heat resistance test. The room temperature curable organopolysiloxane composition of the present invention is not inferior in characteristics to commonly used deoximation-type, dealcoholization-type and deacetonation-type compositions. Further, as shown in Example 4, the room temperature curable organopolysiloxane composition of the present invention exhibited good characteristics even though an organobismuth catalyst was used, but the dealcoholization-type composition of Comparative Example 3 using an organobismuth catalyst was not cured. From these results, it can be seen that the hydrolyzable organosilane compound used in the room temperature curable organopolysiloxane composition of the present invention is superior in end blocking ability and curability to the dealcoholization-type curing agent.

The compound released by the compositions of Examples during curing is cyclopentanone, which is a compound having high safety without having been reported to have health harmfulness to the human body such as carcinogenicity and reproduction toxicity, or environmental harmfulness such as toxicity to aquatic organisms. On the other hand, the compounds released by the compositions of Comparative Examples during curing are all indicated as having health harmfulness in SDS (safety data sheet) or the like. The compounds include 2-butanone oxime which may be carcinogenic and has toxicity to aquatic organisms, methanol which is designated as a deleterious substance and has strong toxicity to the human body, and acetone which damages organs in repeated exposure. In addition, it can be seen that the room temperature curable organopolysiloxane composition of the present invention is further excellent from the viewpoint of the health of the human body and environmental protection because methanol and acetone have a lower burning point and boiling point as compared to cyclopentanone.

From the above results, it has been found that the room temperature curable organopolysiloxane composition of the present invention desorbs a compound having higher safety during curing, and has good curability regardless of which catalyst is used, a cured product thereof has good physical properties, adhesive property and durability (resistance to moist heat and heat resistance), and the composition can be suitably used in various applications (e.g. adhesive agents, sealing materials, potting agents and coating agents).

Examples of synthesis of the novel hydrolyzable organosilane compound of the present invention are shown below. The synthesized compound was identified by ¹H-NMR to confirm its synthesis.

### [Example of Synthesis 1] Synthesis of hydrolyzable organosilane compound 4

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine, 5 g (0.05 mol) of copper (I) chloride and 1,500 ml of hexane, and 400 g (2.47 mol) of vinyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 180°C and 300 Pa to obtain a hydrolyzable organosilane compound 4 (yield 532 g, yield coefficient 69%). This reaction formula is represented by, for example, the following formula [II].

¹H-NMR (400 MHz, CDCl₃)
δ6.11 (-CH=CH₂, m, 2H), δ6.02 (-CH=CH₂, m, 1H), δ4.43 (-OC(CH₂)=CH-, s, 3H), δ2.20 (-OC-CH₂-, t, 6H), δ2.15 (-OC=CH-CH₂-, m, 6H), δ2.15 (-OC-CH₂-CH₂-, m, 6H)

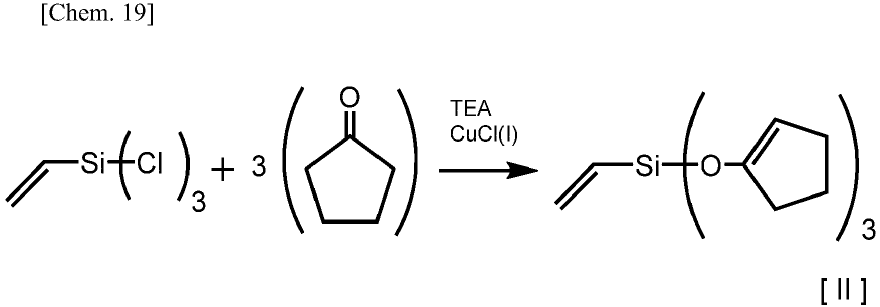

### [Example of Synthesis 2] Synthesis of hydrolyzable organosilane compound 5

A 5,000 mL four-neck separable flask equipped with a mechanical stirrer, a thermometer, a reflux tube and a dropping funnel was charged with 834 g (9.9 mol) of cyclopentanone, 825 g (8.2 mol) of triethylamine, 5 g (0.05 mol) of copper (I) chloride and 1,500 ml of hexane, and 522 g (2.47 mol) of phenyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 200°C and 300 Pa to obtain a hydrolyzable organosilane compound 5 (yield 568 g, yield coefficient 65%). This reaction formula is represented by, for example, the following formula [III].

¹H-NMR (400 MHz, CDCl₃)
δ6.64 (Si-C₆H₅, m, 5H), δ4.40 (-OC(CH₂)=CH-, s, 3H), δ2.20 (-OC-CH₂-, t, 6H), δ2.15 (-OC=CH-CH₂-, m, 6H), δ2.13 (-OC-CH₂-CH₂-, m, 6H)

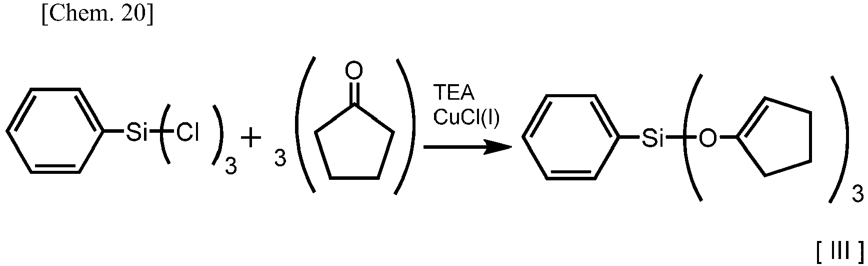

### [Example of Synthesis 3] Synthesis of hydrolyzable organosilane compound 6

A 5,000 mL four-neck separable flask equipped with a mechanical stirrer, a thermometer, a reflux tube and a dropping funnel was charged with 758 g (9.0 mol) of cyclopentanone, 727 g (7.2 mol) of triethylamine, 5 g (0.05 mol) of copper (I) chloride and 1,200 ml of hexane, and 255 g (1.5 mol) of methyltrichlorosilane was added dropwise at 40 to 60°C over about 2 hours. Thereafter, the mixture was stirred at 80°C for 12 hours, triethylamine hydrochloride generated was then removed by filtration, hexane was distilled off from the filtrate under the conditions of 100°C and normal pressure, and the mixture was then distilled under the conditions of 210°C and 300 Pa to obtain a hydrolyzable organosilane compound 6 (yield 302 g, yield coefficient 56%). This reaction formula is represented by, for example, the following formula [IV].

¹H-NMR (400 MHz, CDCl₃)
δ4.45 (-OC(CH₂)=CH-, s, 4H), δ2.22 (-OC-CH₂-, t, 8H), δ2.15 (-OC=CH-CH₂-, m, 8H), δ2.15 (-OC-CH₂-CH₂-, m, 8H)

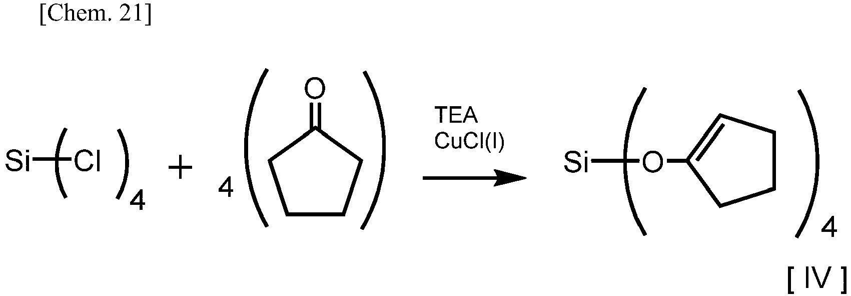

### [Composition Example 1]

100 parts by weight of linear dimethylpolysiloxane which has a viscosity of 20,000 mPa-s and in which both ends of the molecular chain are blocked with silanol groups (hydroxyl group bonded to a silicon atom) (dimethylpolysiloxane of the general formula (1), where R¹ is a methyl group and a is about 620), 7 parts by weight of the hydrolyzable organosilane compound 4 and 0.5 parts by weight of γ-tetramethylguanidylpropyltrimethoxysilane were added and mixed to uniformity in the absence of moisture to prepare a composition.

### [Composition Example 2]

100 parts by weight of linear dimethylpolysiloxane which has a viscosity of 20,000 mPa-s and in which both ends of the molecular chain are blocked with silanol groups (hydroxyl group bonded to a silicon atom) (dimethylpolysiloxane of the general formula (1), where R¹ is a methyl group and a is about 620), 7 parts by weight of the hydrolyzable organosilane compound 5 and 0.5 parts by weight of γ-tetramethylguanidylpropyltrimethoxysilane were added and mixed to uniformity in the absence of moisture to prepare a composition.

### [Composition Example 3]

100 parts by weight of linear dimethylpolysiloxane which has a viscosity of 20,000 mPa-s and in which both ends of the molecular chain are blocked with silanol groups (hydroxyl group bonded to a silicon atom) (dimethylpolysiloxane of the general formula (1), where R¹ is a methyl group and a is about 620), 7 parts by weight of the hydrolyzable organosilane compound 6 and 0.5 parts by weight of γ-tetramethylguanidylpropyltrimethoxysilane were added and mixed to uniformity in the absence of moisture to prepare a composition.

### [Composition Comparative Example 1]

100 parts by weight of linear dimethylpolysiloxane which has a viscosity of 20,000 mPa-s and in which both ends of the molecular chain are blocked with silanol groups (hydroxyl group bonded to a silicon atom) (dimethylpolysiloxane of the general formula (1), where R¹ is a methyl group and a is about 620), 7 parts by weight of vinyltrisketoximesilane and 0.1 parts by weight of dioctyltin dilaurate were added and mixed to uniformity in the absence of moisture to prepare a composition.

### [Composition Comparative Example 2]

100 parts by weight of linear dimethylpolysiloxane which has a viscosity of 20,000 mPa-s and in which both ends of the molecular chain are blocked with silanol groups (hydroxyl group bonded to a silicon atom) (dimethylpolysiloxane of the general formula (1), where R¹ is a methyl group and a is about 620), 7 parts by weight of vinyltrimethoxysilane and 0.1 parts by weight of dioctyltin dilaurate were added and mixed to uniformity in the absence of moisture to prepare a composition.

Each of the compositions prepared in Composition Examples and Composition Comparative Examples was poured into a 2 mm mold and aged at 23°C and 50% RH for 7 days to obtain a rubber sheet having a thickness of 2 mm. The tack-free time (skin-over time) was measured in accordance with the method specified in JIS A 5758, and rubber physical properties (hardness, elongation at break and tensile strength) were measured from the sheet having a thickness of 2 mm in accordance with JIS K 6249.

The results are shown in Table 3.

**[Table 3]**

| | Composition Example | | | Composition Comparative Example | |
|---|---|---|---|---|---|
| | 1 | 2 | 3 | 1 | 2 |
| Tack-free time (min) | 3 | 3 | 2 | 20 | 50 |
| Hardness (type A durometer) | 15 | 15 | 18 | 15 | 11 |
| Elongation at break (%) | 180 | 180 | 140 | 170 | 210 |
| Tensile strength (MPa) | 0.34 | 0.33 | 0.36 | 0.29 | 0.24 |

It has been found that the hydrolyzable organosilane compound of the present invention exhibits high curability even if a basic catalyst is used, and the tack free time is much short as compared to conventional crosslinking agents. Results were obtained which showed that physical properties after curing were acceptable. On the other hand, for Composition Comparative Examples 1 and 2 in which use of a tin catalyst having high toxicity was essential, results were obtained which showed that the tack-free time was long and curability was poor. In the compositions of Composition Examples 1 to 3, the gas desorbed during curing is cyclopentanone, which is a compound having high safety, and the compositions are more advantageous in terms of safety as compared to the composition of Composition Comparative Example 1 which releases 2-butanone oxime that may be carcinogenic and the composition of Composition Comparative Example 2 which releases methanol that is a deleterious substance.

## Claims

1. A room temperature curable organopolysiloxane composition comprising:
(A) 100 parts by weight of an organopolysiloxane of the following general formula (1) which has a viscosity of 20 to 1,000,000 mPa-s at 23°C:
HO-(SiR¹₂O)ₐ-H (1)
wherein R¹ is an unsubstituted or substituted monovalent hydrocarbon group having 1 to 10 carbon atoms, R¹s may be the same or different groups, and a is an integer of 50 or more; and
(B) 1 to 40 parts by weight of a hydrolyzable organosilane compound of the following general formula (2) and/or a partial hydrolytic condensate thereof 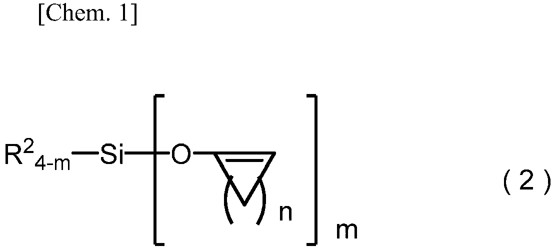 wherein R² is a monovalent hydrocarbon group having 1 to 10 carbon atoms, n is an integer of 1 to 8, and m is 3 or 4.

2. The room temperature curable organopolysiloxane composition according to claim 1, wherein the hydrolyzable organosilane compound and/or a partial hydrolytic condensate thereof as the component (B) desorbs a cyclic ketone compound by hydrolysis.

3. The room temperature curable organopolysiloxane composition according to claim 2, wherein the cyclic ketone compound desorbed is cyclobutanone or cyclopentanone.

4. The room temperature curable organopolysiloxane composition according to any one of claims 1 to 3, wherein the hydrolyzable organosilane compound as the component (B) is a hydrolyzable organosilane compound of the following general formula (4): 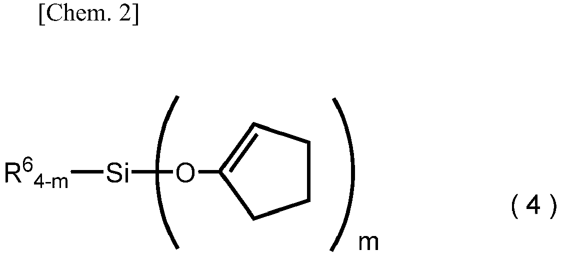 wherein R⁶ is a vinyl group or a phenyl group, and m is 3 or 4.

5. The room temperature curable organopolysiloxane composition according to any one of claims 1 to 4, further comprising (C) 0.01 to 10 parts by weight of a curing catalyst per 100 parts by weight of the component (A).

6. The room temperature curable organopolysiloxane composition according to claim 5, wherein the (C) curing catalyst is at least one selected from a tin catalyst, a titanium catalyst, an organic strong base catalyst, and an organobismuth catalyst.

7. The room temperature curable organopolysiloxane composition according to any one of claims 1 to 6, which is free of a tin catalyst.

8. The room temperature curable organopolysiloxane composition according to any one of claims 1 to 7, further comprising (D) 0.01 to 10 parts by weight of a silane coupling agent of the following general formula (3) and/or a partial hydrolytic condensate thereof per 100 parts by weight of the component (A):
R³R⁴_{b}SiX_{3-b} (3)
wherein R³ is a monovalent hydrocarbon group having 1 to 20 carbon atoms and having at least one functional group (with exclusion of a guanidyl group) containing one or more heteroatoms selected from a nitrogen atom, a sulfur atom and an oxygen atom, R⁴ is an unsubstituted or substituted monovalent hydrocarbon group having 1 to 10 carbon atoms, X is a hydrolyzable group, and b is 0, 1 or 2.

9. The room temperature curable organopolysiloxane composition according to any one of claims 1 to 8, further comprising (E) 1 to 500 parts by weight of an inorganic filling agent per 100 parts by weight of the component (A).

10. The room temperature curable organopolysiloxane composition according to claim 9, wherein the component (E) is one or more inorganic filling agents selected from calcium carbonate, fumed silica, precipitated silica, carbon black and aluminum oxide.

11. An automobile part comprising a cured product of the room temperature curable organopolysiloxane composition according to any one of claims 1 to 10.

12. An automobile oil seal comprising a cured product of the room temperature curable organopolysiloxane composition according to any one of claims 1 to 10.

13. An electrical or electronic part comprising a cured product of the room temperature curable organopolysiloxane composition according to any one of claims 1 to 10.

14. A building structure comprising a cured product of the room temperature curable organopolysiloxane composition according to any one of claims 1 to 10.

15. A civil engineering structure comprising a cured product of the room temperature curable organopolysiloxane composition according to any one of claims 1 to 10.

16. An adhesive agent comprising the room temperature curable organopolysiloxane composition according to any one of claims 1 to 10.

17. A sealing material comprising the room temperature curable organopolysiloxane composition according to any one of claims 1 to 10.

18. A potting agent comprising the room temperature curable organopolysiloxane composition according to any one of claims 1 to 10.

19. A coating agent comprising the room temperature curable organopolysiloxane composition according to any one of claims 1 to 10.

20. A hydrolyzable organosilane compound of the following general formula (4): 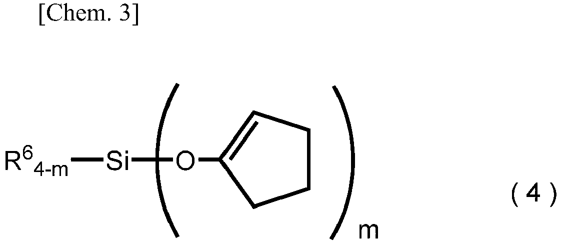 wherein R⁶ is a vinyl group or a phenyl group, and m is 3 or 4.

21. The hydrolyzable organosilane compound according to claim 20, which desorbs cyclopentanone by hydrolysis.

22. A method for producing the hydrolyzable organosilane compound according to claim 20 or 21, comprising a step of reacting a chlorosilane compound with cyclopentanone in the presence of a basic substance and a catalyst as shown by the following reaction formula [I]: 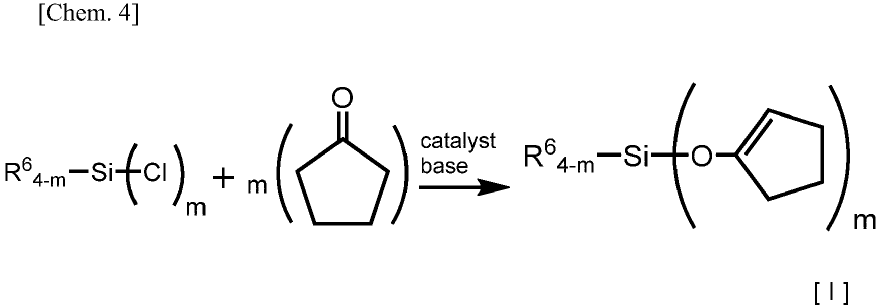 wherein R⁶ and m are as described above.

23. The method for producing the hydrolyzable organosilane compound according to claim 22, wherein an amount of addition of the cyclopentanone is 0.95 to 3.0 mol per 1 mol of chlorine atoms in the chlorosilane compound.

24. The method for producing the hydrolyzable organosilane compound according to claim 22 or 23, wherein the catalytic substance is copper chloride, copper iodide, copper bromide, silver chloride, silver iodide or silver bromide.

25. The method for producing the hydrolyzable organosilane compound according to any one of claims 22 to 24, wherein an amount of addition of the catalytic substance is 0.001 to 0.5 mol per 1 mol of the chlorosilane compound.

26. The method for producing the hydrolyzable organosilane compound according to any one of claims 22 to 25, wherein the basic substance is trimethylamine, triethylamine, tripropylamine, tributylamine, urea, diazabicycloundecene or diazabicyclononene.

27. The method for producing the hydrolyzable organosilane compound according to any one of claims 22 to 26, wherein an amount of addition of the basic substance is 0.95 to 2.5 mol per 1 mol of chlorine atoms in the chlorosilane compound.
